# EUROPÄISCHE PATENTANMELDUNG

(11) **EP 3 782 471 A1**
(43) Veröffentlichungstag der Anmeldung: **24.02.2021**
(21) Anmeldenummer: 19193078.3
(22) Anmeldetag: 22.08.2019
(51) Int. Cl.: A23C 9/156, A23C 9/133, A23C 9/154

(54) **MILCHMISCHERZEUGNIS**

(71) Anmelder: Allgaier, Michael, 72227 Egenhausen (DE); Mast, Norbert, 75385 Bad Teinach (DE); Schill, Reinhold, 75365 Calw-Stammheim (DE)
(72) Erfinder: Allgaier, Michael, 72227 Egenhausen (DE)
(74) Vertreter: Späth, Dieter

(57) **Zusammenfassung**

Gegenstand der Erfindung ist ein Milchmischerzeugnis, das insbesondere ein Joghurt und ein Apfelmark und/oder ein Birnenmark aber keinen Zusatz von Zucker oder eines Süßstoffs enthält.

## Beschreibung

Die Erfindung betrifft ein Milchmischerzeugnis mit einem Milcherzeugnis wie Quark und/oder Joghurt und mit einem Apfelmark und/oder einem Birnenmark. "Pastös" bezeichnet eine Fließfähigkeit des Milcherzeugnisses, das nicht fließfähig oder zähflüssig wie Quark oder Joghurt ist.

Es sind Fruchtjoghurts bekannt, die Joghurt und Früchte enthalten.

Aufgabe der Erfindung ist ein Milchmischerzeugnis mit einem niedrigen physiologischen Brennwertgehalt ("Kaloriengehalt") vorzuschlagen.

Diese Aufgabe wird erfindungsgemäß dadurch gelöst, dass dem Milchmischerzeugnis kein Zucker zugesetzt ist. Das erfindungsgemäße Milchmischerzeugnis enthält nur den Zucker, den das enthaltene Milcherzeugnis und ein Apfelmark und/oder ein Birnenmark, das ebenfalls in dem Milchmischerzeugnis enthalten ist, von Natur aus oder von vornherein enthalten. Außerdem enthält das erfindungsgemäße Milchmischerzeugnis keinen Süßstoff.

Zur Süßung und um dem Milchmischerzeugnis einen Fruchtgeschmack zu geben enthält das erfindungsgemäße Milchmischerzeugnis das Apfelmark und/oder das Birnenmark. Das Apfelmark und/oder das Birnenmark kann mit dem Milcherzeugnis gemischt oder von ihm getrennt sein und vor Verzehr gemischt werden. Beispielsweise sind das Milcherzeugnis und das Apfelmark und/oder das Birnenmark in einem Aufbewahrungsbehältnis enthalten, wobei das Milcherzeugnis und das Apfelmark und/oder das Birnenmark in voneinander getrennten Räumen des Aufbewahrungsbehältnisses oder gemeinsam in einem Raum beispielsweise übereinander enthalten sein können.

Apfelmark und Birnenmark haben einen starken Eigengeschmack und geben dem Milchmischerzeugnis, wenn sie mit dem Milcherzeugnis gemischt sind, einen erheblich stärkeren Fruchtgeschmack als andere Früchte. Apfelmark und Birnenmark bestehen aus oder weisen passierte oder zerkleinerte und gekochte Äpfel und Birnen auf. Erfindungsgemäß möglich sind auch in anderer Weise verarbeitete Äpfel oder Birnen, die durch ihre Verarbeitung die Konsistenz von Apfelmark oder Birnenmark beziehungsweise von Apfelmus oder Birnenmus, jedoch keinen Zusatz von Zucker, aufweisen. Im Unterschied zu Apfelmus und Birnenmus ist Apfelmark und Birnenmark kein Zucker zugesetzt, sondern es enthält ausschließlich den von Natur aus enthaltenen Zucker. Das erfindungsgemäße Apfelmark oder Birnenmark kann auch als Apfelmus oder Birnenmus ohne Zusatz von Zucker aufgefasst werden.

Das Milcherzeugnis kann flüssig, beispielsweise ein Trinkjoghurt sein. Das Milchmischerzeugnis kann beispielsweise flüssig oder pastös sein. Vorzugsweise ist das Milcherzeugnis pastös, es weist eine Fließfähigkeit wie Quark oder Joghurt auf, das heißt es ist zähfließend oder nicht fließfähig. Vorzugsweise ist auch das Milchmischerzeugnis beziehungsweise sind seine Komponenten pastös. Vorzugsweise ist das Milcherzeugnis des erfindungsgemäßen Milchmischerzeugnisses ein Quark und/oder ein Joghurt.

Eine bevorzugte Ausgestaltung der Erfindung sieht ein Naturjoghurt als Milcherzeugnis beziehungsweise als Komponente des erfindungsgemäßen Milchmischerzeugnisses vor. Ein Naturjoghurt ist ein Joghurt, das ausschließlich aus Milch und Milchsäurebakterien hergestellt ist und dem kein Zucker und kein Süßstoff zugesetzt ist.

Vorzugsweise enthält das Milcherzeugnis, insbesondere also das Joghurt des erfindungsgemäßen Milchmischerzeugnisses einen Fettgehalt von etwa 1,5 Gewichtsprozent oder einen Fettgehalt zwischen 1,3 und 1,8 Gewichtsprozent. Fett ist ein Geschmacksträger, was bedeutet, dass das Fett im Milcherzeugnis den Geschmack des Apfelmarks und/oder des Birnenmarks verstärkt. Ein Fettgehalt von etwa 1,5 Gewichtsprozent im Milcherzeugnis hat eine gute Geschmacksverstärkung ergeben ohne den physiologischen Brennwert stark zu erhöhen. Ein Fettgehalt zwischen etwa 1,3 und 1,8 Gewichtsprozent im Milcherzeugnis ergibt ein gutes Verhältnis zwischen Geschmacksverstärkung und niedrigem physiologischem Brennwert. Die Geschmacksverstärkung lässt sich durch einen höheren Fettgehalt im Milcherzeugnis erhöhen, der jedoch nicht über 4,2 Gewichtsprozent betragen sollte, um den physiologischen Brennwert nicht zu sehr zu erhöhen. Wird ein höherer physiologischer Brennwert in Kauf genommen, sind auch höhere Fettgehalte möglich. Als unterer Grenzwert zum Zwecke der Geschmacksverstärkung des Apfelmarks und/oder Birnenmarks hat sich ein Fettgehalt von mindestens 0,3 Gewichtsprozent und vorzugsweise mindestens 0,5 Gewichtsprozent im Milcherzeugnis gezeigt. Ein niedrigerer Fettgehalt ist möglich wenn eine schwache Geschmacksverstärkung in Kauf genommen, der Geschmack, insbesondere der Fruchtgeschmack in anderer Weise verstärkt oder der Fruchtgeschmack als ausreichend angesehen wird.

In bevorzugter Ausgestaltung der Erfindung enthält das Milchmischerzeugnis ausschließlich das pastösen Milcherzeugnis und das Apfelmark und/oder das Birnenmark. Es kann auch mehrere Milcherzeugnisse enthalten. Das Milchmischerzeugnis besteht also ausschließlich aus den Komponenten Milcherzeugnis oder Milcherzeugnisse und Apfelmark und/oder Birnenmark.

Das erfindungsgemäße Milchmischerzeugnis enthält vorzugsweise mindestens 70 Gewichtsprozent des Milcherzeugnisses. Es kann auch einen höheren Anteil des Milcherzeugnisses von mindestens 80 Gewichtsprozent oder mindestens 90 Gewichtsprozent enthalten. Abweichend von der allgemeinen Definition eines Milchmischerzeugnisses, das zu mindestens 70 Gewichtsprozent aus einem Milchprodukt oder aus Milchprodukten besteht, kann das erfindungsgemäße Milchmischerzeugnis auch einen niedrigeren Anteil des Milcherzeugnisses von mindestens 50 Gewichtsprozent enthalten. Nicht ausgeschlossen ist ein noch niedriger Anteil des Milchprodukts im erfindungsgemäßen Milchmischerzeugnis. Im übrigen besteht das erfindungsgemäße Milchmischerzeugnis aus dem Apfelmark und/oder dem Birnenmark. Enthält das Milchmischerzeugnis weitere Komponenten, was zwar nicht vorgesehen aber auch nicht ausgeschlossen ist, verringert sich der Anteil des Apfelmarks und/oder des Birnenmarks entsprechend.

## Patentansprüche

1. Milchmischerzeugnis mit einem Milcherzeugnis, **dadurch gekennzeichnet, dass** das Milchmischerzeugnis ein Apfelmark und/oder ein Birnenmark enthält, dass dem Milchmischerzeugnis kein Zucker zugesetz ist und dass das Milchmischerzeugnis keinen Süßstoff enthält.

2. Milchmischerzeugnis nach Anspruch 1, **dadurch gekennzeichnet, dass** das Milcherzeugnis pastös ist.

3. Milchmischerzeugnis nach Anspruch 2, **dadurch gekennzeichnet, dass** das Milchmischerzeugnis Quark und/oder Joghurt als pastöses Milcherzeugnis enthält.

4. Milchmischerzeugnis nach Anspruch 2 oder 3, **dadurch gekennzeichnet, dass** das Milchmischerzeugnis ein Naturjoghurt als pastöses Milcherzeugnis enthält.

5. Milchmischerzeugnis nach einem oder mehreren der vorhergehenden Ansprüche, **dadurch gekennzeichnet, dass** das Milcherzeugnis einen Fettgehalt von nicht mehr als 4,2 Gewichtsprozent Fett, vorzugsweise zwischen 1,3 und 1,8 Gewichtsprozent Fett, vorzugsweise 1,5 Gewichtsprozent Fett und/oder mindestens 0,3 Gewichtsprozent Fett und vorzugsweise mindestens 0,5 Gewichtsprozent Fett enthält.

6. Milchmischerzeugnis nach einem oder mehreren der vorhergehenden Ansprüche, **dadurch gekennzeichnet, dass** das Milchmischerzeugnis ausschließlich das pastöse Milcherzeugnis und das Apfelmark und/oder das Birnenmark enthält.

7. Milchmischerzeugnis nach einem oder mehreren der vorhergehenden Ansprüche, **dadurch gekennzeichnet, dass** das Milchmischerzeugnis einen Anteil von mindestens 90 Gewichtsprozent, mindestens 80 Gewichtsprozent, mindestens 70 Gewichtsprozent oder mindestens 50 Gewichtsprozent des Milcherzeugnisses enthält.

## Geänderte Patentansprüche

### Geänderte Patentansprüche gemäss Regel 137(2) EPÜ.

**1.** Milchmischerzeugnis mit einem Milcherzeugnis, wobei dem Milchmischerzeugnis kein Zucker zugesetzt ist und wobei das Milchmischerzeugnis keinen Süßstoff enthält, **dadurch gekennzeichnet, dass** das Milchmischerzeugnis ein Apfelmark und/oder ein Birnenmark enthält..

**1.** Milchmischerzeugnis mit einem Milcherzeugnis, wobei dem Milchmischerzeugnis kein Zucker zugesetzt ist und wobei das Milchmischerzeugnis keinen Süßstoff enthält, **dadurch gekennzeichnet, dass** das Milchmischerzeugnis ausschließlich das pastöse Milcherzeugnis und ein Apfelmark und/oder ein Birnenmark enthält.
